# FASCICULE DE BREVET EUROPEEN

(11) **EP 2 118 228 B1**
(45) Date de publication et mention de la délivrance du brevet: **03.05.2017**
(21) Numéro de dépôt: 08761977.1
(22) Date de dépôt: 24.01.2008
(51) Int. Cl.: C09K 5/04

(54) **FLUIDE FRIGORIGENE A BASE DE DIETHER CYCLIQUE**
KÜHLFLÜSSIGKEIT MIT EINEM ZYKLISCHEN DIETHER
REFRIGERANT FLUID CONTAINING CYCLIC DIETHER

(30) Priorité: 12.02.2007 FR 0753181
(43) Date de publication de la demande: 18.11.2009
(73) Titulaire: ARKEMA FRANCE, 92700 Colombes (FR)
(72) Inventeur: RACHED, Wissam, F-69007 Lyon (FR); DEVIC, Michel, F-69110 Sainte Foy Les Lyon (FR)
(74) Mandataire: Chahine, Audrey Claire
(86) Numéro de dépôt international: PCT/FR2008/050111
(87) Numéro de publication internationale: WO 2008/104648

(56) Documents cités:
- WO-A-94/26837
- WO-A-94/29402
- FR-A- 2 084 474
- US-A- 5 484 547

## Description

La présente invention concerne des fluides frigorigènes aptes à être utilisés dans les différents types de systèmes à compression et en particulier dans la production d'air conditionné. Elle a plus particulièrement pour objet des fluides frigorigènes dont la contribution à l'effet de serre est très faible.

Les problèmes posés par les substances appauvrissant la couche d'ozone atmosphérique (ODP : ozone depletion potential) ont été traités à Montréal où a été signé le protocole imposant une réduction de la production et de l'utilisation des chlorofluorocarbures (CFC). Ce protocole a fait l'objet d'amendements qui ont imposé l'abandon des CFC et étendu la réglementation à d'autres produits, dont les hydrochlorofluorocarbones (HCFC).

L'industrie de la réfrigération et de la production d'air conditionné a beaucoup investi dans la substitution de ces fluides frigorigènes et c'est ainsi que les hydrofluorocarbures (HFC) ont été commercialisés.

Dans l'industrie automobile, les systèmes de climatisation des véhicules commercialisés dans de nombreux pays sont passés d'un fluide frigorigène au chlorofluorocarbure (CFC-12) à celui de l'hydrofluorocarbure (1,1,1,2 tetrafluoroéthane : HFC-134a), moins nocif pour la couche d'ozone. Cependant, au regard des objectifs fixés par le protocole de Kyoto, le HFC-134a (GWP = 1300) est considéré comme ayant un pouvoir de réchauffement élevé. La contribution à l'effet de serre d'un fluide est quantifiée par un critère, le GWP (Global Warming Potentials) qui résume le pouvoir de réchauffement en prenant une valeur de référence de 1 pour le dioxyde de carbone.

Le dioxyde de carbone étant non-toxique, ininflammable et ayant un très faible GWP, a été proposé comme fluide frigorigène des systèmes de climatisation en remplacement du HFC-134a. Toutefois, l'emploi du dioxyde de carbone présente plusieurs inconvénients, notamment liés à la pression très élevée de sa mise en oeuvre en tant que fluide frigorigène dans les appareils et technologies existantes.

Par ailleurs, le document GB 1349723 divulgue des polyéthers perfluorés cycliques de formule générale (cyclo-(CF₂-CF₂-O)ₐ-(CF₂-O)_{b}-) dans laquelle a et b peuvent être identiques ou différents et représentent chacun la valeur zéro ou un nombre entier compris entre 1 et 20 et la somme de (a + b) est un nombre entier compris entre 2 et 30.

Le document WO 94/29402 divulgue des compositions azéotropiques ou quasi-azéotropiques du 2,2,4,4,5,5-hexafluoro-1,3-dioxolane avec le cyclopropane et le diméthyléther.

Le document WO 94/26837 décrit des compositions frigorigènes qui comprennent du 2,2,4,4,5,5-hexafluoro-1,3-dioxolane et du fluorométhyl trifluorométhyl éther.

Le document FR 2084474 décrit des perfluoropolyéthers pouvant être utilisés comme fluides réfrigérants.

Le document US 5484547 divulgue des fluides de transfert de chaleur pouvant comprendre du 1,3-dioxolane.

Il a maintenant été trouvé des fluides frigorigènes ayant à la fois un ODP nul ou inférieur à 0,02 et un GWP inférieur à 150.

Les fluides frigorigènes selon la présente invention comprennent au moins un diéther cyclique à deux ou trois atomes de carbone représentés par la formule générale (I) (cyclo -R-O-CHₓF₂₋ₓ-O-)dans laquelle R représente un groupement -CH_{y}F_{2-y}- , un groupement -C₂H_{z}F_{4-z}- ou un groupement éthylénique choisi parmi -CH=CH- , -CH=CF- , -CF=CF- , et -CF=CH-, -C(=CF₂)-, -C(=CH₂)-, -C(=CHF)- et x et y peuvent être identiques ou différents, x et y représentent chacun la valeur zéro, 1 ou 2 et z représente la valeur zéro, 1, 2, 3 ou 4, à l'exclusion du hexafluoro-1,3 dioxolane (cyclo-CF₂-CF₂-O-CF₂-O-), du 1,3-dioxetane, 2,2,4,4-tetrafluoro (cyclo-CF₂-O-CF₂-O-) et 1,3-dioxetane (cyclo-CH₂-O-CH₂-O-).

Comme diéthers cycliques pouvant convenir à la présente invention, on peut citer notamment le 2-fluoro-1,3-dioxétane (cyclo-CH₂-O-CHF-O-), le 1,3-dioxétane-2,4-diyl,2,4-difluoro- (cyclo-CHF-O-CHF-O-), le 2,2-difluoro-1,3-dioxétane (cyclo-CH₂-O-CF₂-O-), le 2,2,4-trifluoro-1,3-dioxétane (cyclo-CHF-O-CF₂-O-), le 1,3-dioxolane (cycio-CH₂-CH₂-O-CH₂-O-), le 2-fluoro-1,3-dioxolane (cyclo-CH₂-CH₂-O-CHF-O-), le 4-fluoro-1,3-dioxolane (cyclo-CH₂-CHF-O-CH₂-0-), le 4,4-difluoro-1,3-dioxolane (cyclo-CH₂-CF₂-O-CH₂-O-), le 2,2-difluoro-1,3-dioxolane (cyclo-CH₂-CH₂-O-CF₂-O-), le 4,5-difluoro-1,3-dioxolane (cis/trans_cyclo-CHF-CHF-O-CH₂-O-), le 2,4-difluoro-1,3-diaxolane (cis/trans_cyclo-CH₂-CHF-O-CHF-O-), le 2,2,4-trifluoro-1,3-dioxolane (cyclo-CHF-CH₂-O-CF₂-O-), le 4,4,5-trifluoro-1,3-dioxolane (cyclo-CF₂-CHF-O-CH₂-O-), le 2,4,4-trifluoro-1,3-dioxolane (cyclo-CF₂-CH₂-O-CHF-O-), le 2,4,5-trifluoro-1,3-dioxolane (cis/trans_cyclo-CHF-CHF-O-CHF-O-), le 2,4,4,5-tetrafluoro-1,3-dioxolane (cis/trans_cyclo-CHF-CF₂-O-CHF-O-), le 2,2,4,5-tetrafluoro-1,3-dioxolane (dioxyflurane) (cis/trans_cyclo-CHF-CHF-O-CF₂-O-), le 2,2,4,4-tetrafluoro-1,3-dioxolane (cyclo-CF₂-CH₂-O-CF₂-O-), le 4,4,5,5-tetrafluoro-1,3-dioxolane (cyclo-CF₂-CF₂-O-CH₂-O-), le 2,4,4,5,5-pentafluoro-1,3-dioxolane (cyclo-CF₂-CF₂-O-CHF-O-), le 2,2,4,4,5-pentafluoro-1,3-dioxolane (cyclo-CF₂-CHF-O-CF₂-O-), 1,3-dioxole (cyclo-CH=CH-O-CH₂-O-), le 2-fluoro-1,3-dioxole(cyclo-CH=CH-O-CHF-O-), le 4-fluoro-1,3-dioxole (cis/trans_cyclo-CH=CF-O-CH₂-O-), le 4,5-difluoro-1,3-dioxole (cyclo-CF=CF-O-CH₂-O-), le 2,4-difluoro-1,3-dioxole (cis/trans_cyclo-CF=CH-O-CHF-O-), le 2,2-difluoro-1,3-dioxole (cyclo-CH=CH-O-CF₂-O-), le 2,2,4-trifluoro-1,3-dioxole (cis/trans_cyclo-CF=CH-O-CF₂-O-), le 2,4,5-trifluoro-1,3-dioxole (cyclo-CF=CF-O-CHF-O-), le 2,2,4,5-tetrafluoro-1,3-dioxole (cyclo -CF=CF-O-CF₂-O-), le 2,2,4-trifluoro-4-methyl-1,3-dioxetane (cyclo-CF₂-OCF(CH₃)-O-), le 2,2,4-trifluoro-4-(fluoromethyl)-1,3-dioxetane (cyclo-CF₂-O-CF(CH₂F)-O-), le 2,2-difluoro-4-(fluoromethylidene)-1,3-dioxetane (cyclo-CF₂-OC(=CHF)-O-) et le 4-(difluoromethylidene)-2,2-difluoro-1,3-dioxetane (cyclo-CF₂-OC(=CF₂)-O-).

Les diéthers cycliques préférés sont, le 1,3-dioxétane-2,4-diyl,2,4-difluoro- (cyclo-CHF-O-CHF-O-), le 2,2-difluoro-1,3-dioxétane (cyclo-CH₂-O-CF₂-O-), le 2,2,4-trifluoro-1,3-dioxétane (cyclo-CHF-O-CF₂-O-), le 2,4,4,5-tetrafluoro-1,3-dioxolane (cis/trans_cyclo-CHF-CF₂-O-CHF-O-), le 2,2,4,5-tetrafluoro-1,3-dioxolane (dioxyflurane) (cis/trans_cyclo-CHF-CHF-O-CF₂-O-), le 2,2,4,4-tetrafluoro-1,3-dioxolane (cyclo-CF₂-CH₂-O-CF₂-O-), le 4,4,5,5-tetrafluoro-1,3-dioxolane (cyclo-CF₂-CF₂-O-CH₂-O-), le 2,4,4,5,5-pentafluoro-1,3-dioxolane (cyclo-CF₂-CF₂-O-CHF-O-), le 2,2,4,4,5-pentafluoro-1,3-dioxolane (cyclo-CF₂-CHF-O-CF₂-O-), le 2,2,4-trifluoro-1,3-dioxole (cis/trans_cyclo-CF=CH-O-CF₂-O-), le 2,4,5-trifluoro-1,3-dioxole (cyclo-CF=CF-O-CHF-O-), le 2,2,4,5-tetrafluoro-1,3-dioxole (cyclo -CF=CF-O-CF₂-O-), le 2,2,4-trifluoro-4-methyl-1,3-dioxetane (cyclo-CF₂-OCF(CH₃)-O-), le 2,2,4-trifluoro-4-(fluoromethyl)-1,3-dioxetane (cyclo-CF₂-O-CF(CH₂F)-O-), le 2,2-difluoro-4-(fluoromethylidene)-1,3-dioxetane (cyclo-CF₂-O-C(=CHF)-O-) et le 4-(difluoromethylidene)-2,2-difluoro-1,3-dioxetane (cyclo-CF₂-O-C(=CF₂)-O-).

Les diethers cycliques particulièremment préférés sont le 2,2,4-trifluoro-4-methyl-1,3-dioxetane (cyclo-CF₂-OCF(CH₃)-O-), le 2,2,4-trifluoro-4-(fluoromethyl)-1,3-dioxetane (cyclo-CF₂-O-CF(CH₂F)-O-), le 2,2-difluoro-4-(fluoromethylidene)-1,3-dioxetane (cyclo-CF₂-O-C(=CHF)-O-) et le 4-(difluoromethylidene)-2,2-difluoro-1,3-dioxetane (cyclo-CF₂-O-C(=CF₂)-O-).

Les fluides frigorigènes selon la présente invention peuvent comprendre, en outre, au moins un composé choisi(s) parmi les hydrocarbures, les hydrofluorocarbures, les (hydro)fluorooléfines, les (hydro)fluoro éthers, les diéthers à trois atomes de carbone, les cyclo (hydro)fluoro ethers, les (hydro)fluoroolefin ethers, cyclo (hydro)fluoroolefin ethers, le bis(tri fluoro méthyle) sulfide, le dimethyl éther ou les (hydro)fluoroiodocarbures.

Le dioxyde de carbone, les gaz rares, l'azote, l'ammoniac, le dioxyde d'azote ou le sulfure d'hydrogène peuvent être présents dans les fluides frigorigènes. La quantité totale de ces composés ne doivent pas dépasser 10 % du poids total du fluide frigorigène.

Comme hydrocarbures, on peut citer notamment le méthane, l'éthane, le propane, le n-butane, l'isobutane, le 2-methylbutane, n-pentane, l'iso-pentane, le cyclopentane, l'éthylène et le propylène,

Comme (hydro)fluorooléfines, on peut citer notamment les hydrofluoroéthylènes, les hydrofluoropropylènes, et les hydrofluorobutylènes. Les hydrofluoropropylènes sont préférés.

Comme (hydro)fluoropropylènes, on peut citer notamment le difluoropropylène (HFO- 1252), le trifluoropropylène (HFO- 1243), le tetrafluoropropylène (HFO- 1234) et le pentafluoropropylène (HFO- 1225). Les hydrofluoropropylènes préférés sont le 1,3,3,3-tetrafluoropropylène (HFO-1234ze), le 2,3,3,3-tetrafluoropropylène (HFO- 1234yf) et le 1,2,3,3,3-pentafluoropropylène (HFO-1225ye) ainsi que chacun des ses stéréoisomères. Le perfluoropropylène peut également convenir.

Comme hydrofluorocarbures, on peut citer notamment le difluorométhane, le difluoroéthane, le 1,1,1,2 tetrafluoroéthane, le 1,1,2,2 tetrafluoroéthane, le pentafluoroéthane, le pentafluoropropane, l'heptafluoropropane et le pentafluorobutane. Le difluorométhane, le difluoroéthane et le 1,1,1,2 tetrafluoroéthane sont préférés.

Comme (hydro)fluoroiodocarbures on peut citer le trifluoroiodométhane (CF₃I).

Comme (hydro)fluoroethers, on peut citer notamment le fluoromethyl difluoromethyl ether (CH₂FOCHF₂), methyl trifluoromethyl ether (CH₃OCF₃), bis(difluoromethyl) ether (CHF₂OCHF₂), fluoromethyl trifluoromethyl ether (CH₂FOCF₃), difluoromethyl trifluoromethyl ether (CF₃OCHF₂), bis(trifluoromethyl) ether (CF₃OCF₃), 2-(difluoromethoxy)-1,1,1-trifluoroethane (CF₃CH₂OCHF₂), 1,1,1,2,2-pentafluoro-2-methoxyethane (CF₃CF₂OCH₃), 2-(difluoromethoxy)-1,1,1,2-tetrafluoroethane (CF₃CHFOCHF₂), 1,1,1-trifluoro-2-(trifluoromethoxy)ethane (CF₃CH₂OCF₃), 1,1,1,2-tetrafluoro-2-(trifluoromethoxy)ethane (CF₃CHFOCF₃), 1-difluoromethoxy-1,1,2,2,2-pentafluoroethane (CF₃CF₂OCHF₂), 1,1,1,2,2-pentafluoro-2-(trifluoromethoxy)ethane (CF₃CF₂OCF₃).

Comme diéther linéaire à trois atomes de carbone, on peut citer ceux représentés par la formule générale (II) (R₁-O-R₃-O-R₂) dans laquelle R₁ et R₂ identiques ou différents, représentent chacun un radical méthyle pouvant être partiellement ou totalement fluoré et R₃ représente un radical méthylène éventuellement fluoré choisi parmi - CH₂- , - CHF - et -CF₂- .

Comme (hydro)fluoroolefin ether, on peut citer notamment le (trifluoromethoxy)ethylene (CH₂=CH-O-CF₃), 1-(difluoromethoxy)-1-fluoroethene (CH₂=CF-O-CHF₂), 1-(difluoromethoxy)-2-fluoroethene (CHF=CH-O-CHF₂), 1,1-difluoro-2-(fluoromethoxy)ethene (CF₂=CH-O-CH₂F), 1,2-difluoro-1-(fluoromethoxy)ethene (CHF=CF-O-CH₂F), 1,1,2-trifluoro-2-methoxyethene(CF₂=CF-O-CH₃), (Z)-1-fluoro-2-(trifluoromethoxy)ethylene (CHF=CH-O-CF₃), 1-fluoro-1-(trifluoromethoxy)ethene(CH₂=CF-O-CF₃), (Z)-1,2-difluoroethenyl difluoromethyl ether (CHF=CF-O-CHF₂), 2,2-difluoroethenyl difluoromethyl ether (CF₂=CH-O-CHF₂), 1,1,2-trifluoro-2-(fluoromethoxy)ethene(CF₂=CF-O-CH₂F), 1,1-difluoro-2-(trifluoromethoxy)ethylene(CF₂=CHOCF₃), 1-(difluoromethoxy)-1,2,2-trifluoroethene(CF₂=CFOCHF₂), 1,1,2-trifluoro-2-(trifluoromethoxy)ethylene ou (perfluoromethyl vinyl ether) (CF₂=CFOCF₃).

Comme cyclo (hydro)fluoroethers on peut citer notamment le 2,3-difluorooxirane (-CHF-CHF-O-), 2,2-difluorooxirane(-CF₂-CH₂-O-), 2,2,3-trifluorooxirane(-CF₂-CHF-O-), tetrafluorooxirane(-CF₂-CF₂-O-), 2,2,4-trifluorooxetane(-CF₂-CH₂-CHF-O-), 2,3,4-trifluorooxetane(-CHF-CHF-CHF-O-), 2,3,3-trifluorooxetane(-CHF-CF₂-CH₂-O-), 2,2,3,3-tetrafluorooxetane(-CF₂-CF₂-CH₂-O-), 2,2,3,4,4-pentafluorooxetane(-CF₂-CHF-CF₂-O-), 2,2,3,3,4-pentafluorooxetane(-CF₂-CF₂-CHF-O-), hexafluorooxetane(-CF₂-CF₂-CF₂-O-).

Comme cyclo (hydro)fluoroolefin ethers on peut citer notamment le 2,2-difluoro-2H-oxete (-CF₂-CH=CH-O-), 2,3-difluoro-2H-oxete(-CHF-CF=CH-O-), 3,4-difluoro-2H-oxete(-CH₂-CF=CF-O-), 2,3,4-trifluoro-2H-oxete(-CHF-CF=CF-0-), 2,2,3-trifluoro-2H-oxete(-CF₂-CF=CH-O-), 2,2,4-trifluoro-2H-oxete(-CF₂-CH=CF-O-), 2,2,3,4-tetrafluoro-2H-oxete(-CF₂-CF=CF-O-).

Les fluides frigorigènes selon la présente invention conviennent particulièrement pour les systèmes de compression dans la fabrication d'air conditionné et plus particulièrement dans la fabrication d'air conditionné des véhicules. Les fluides frigorigènes selon la présente invention sont de préférence utilisés en remplacement partiel ou total du 1,1,1,2-tetrafluoroéthane dans la fabrication d'air conditionné et avantageusement dans la fabrication d'air conditionné des véhicules.

Les fluides frigorigènes selon la présente invention peuvent en outre être utilisés en remplacement du R-22, R-404A et R-410 A.

La présente invention a également pour objet un dispositif pour transfert de chaleur dans un cycle de compression renfermant les fluides frigorigènes décrits précédemment.

## Revendications

1. Fluide frigorigène, ayant à la fois un ODP nul ou inférieur à 0,02 et un GWP inférieur à 150, comprenant au moins un diéther cyclique à deux ou trois atomes de carbone représentés par la formule générale (I) (cyclo -R-O-CHₓF₂₋ₓ-O-) dans laquelle R représente un groupement -CH_{y}F_{2-y}- , un groupement - C₂H_{z}F_{4-z} ou un groupement éthylénique choisi parmi -CH=CH- , -CH=CF-, - CF=CF- , -CF=CH-, -C(=CF₂)-, -C(=CH₂)-, et -C(=CHF)-, et x et y peuvent être identiques ou différents, x et y représentent chacun la valeur zéro, 1 ou 2 et z représente la valeur zéro, 1, 2, 3 ou 4, à l'exclusion de l'hexafluoro-1,3 dioxolane (cyclo-CF₂-CF₂-O-CF₂-O-), du 1,3-dioxetane, 2,2,4,4-tetrafluoro (cyclo-CF₂-O-CF₂-O) et du 1,3-dioxetane (cyclo-CH₂-O-CH₂-O-),

2. Fluide frigorigène selon la revendication 1 **caractérisé en ce qu'**il comprend en outre au moins un composé choisi(s) parmi les hydrocarbures, les hydrofluorocarbures, les (hydro)fluorooléfines, les (hydro)fluoro éthers, les diéthers à trois atomes de carbone, les cyclo (hydro)fluoro ethers, les (hydro)fluoroolefin ethers, cyclo (hydro)fluoroolefin ethers, le bis(tri fluoro méthyle) sulfide, le dimethyl éther au les (hydro)fluoroiodocarbures.

3. Dispositif pour transfert de chaleur dans un système à compression renfermant le fluide frigorigène selon la revendication 1 ou 2.

4. Dispositif selon la revendication 3 **caractérisé en ce qu'**il est utilisé dans la fabrication de l'air conditionné.

5. Utilisation du fluide frigorigène selon la revendication 1 ou 2 pour la fabrication d'air conditionné.

6. Utilisation du fluide frigorigène selon la revendication 1 ou 2 en replacement du 1,1,1,2-tetrafluoroéthane.

## Patentansprüche

1. Kältemittelfluid, das sowohl ein ODP von null oder weniger als 0,02 als auch ein GWP von weniger als 150 aufweist, umfassend mindestens einen cyclischen Diether mit zwei oder drei Kohlenstoffatomen, der durch die allgemeine Formel (I) (Cyclo-R-O-CHₓF₂₋ₓ-O-) wiedergegeben wird, in der R für eine -CH_{y}F_{2-y}-Gruppe, eine -C₂H_{z}F_{4-z}-Gruppe oder eine ethylenische Gruppe, die aus -CH=CH-, -CH=CF-, -CF=CF-, -CF=CH-, -C(=CF₂) -, -C(=CH₂)- und -C(=CHF)- ausgewählt ist, steht und x und y gleich oder verschieden sein können, x und y jeweils für den Wert null, 1 oder 2 stehen und z für den Wert null, 1, 2, 3 oder 4 steht, mit Ausnahme von Hexafluor-1,3-dioxolan (Cyclo-CF₂-CF₂-O-CF₂-O-), 2,2,4,4-Tetrafluor-1,3-dioxetan (Cyclo-CF₂-O-CF₂-O) und 1, 3-Dioxetan (Cyclo-CH₂-O-CH₂-O).

2. Kältemittelfluid nach Anspruch 1, **dadurch gekennzeichnet, dass** es außerdem mindestens eine Verbindung, die aus Kohlenwasserstoffen, teilfluorierten Fluorkohlenwasserstoffen, (Hydro)-fluorolefinen, (Hydro)fluorethern, Diethern mit drei Kohlenstoffatomen, Cyclo(hydro)fluorethern, (Hydro)fluorolefinethern, Cyclo(hydro)fluorolefinethern, Bis(trifluormethyl)sulfid, Dimethylether oder (teilhalogenierten) Fluoriodkohlenwasserstoffen ausgewählt ist, umfasst.

3. Vorrichtung zur Übertragung von Wärme in einem Verdichtungssystem, das das Kältemittelfluid nach Anspruch 1 oder 2 enthält.

4. Vorrichtung nach Anspruch 3, **dadurch gekennzeichnet, dass** sie bei der Herstellung von klimatisierter Luft verwendet wird.

5. Verwendung eines Kältemittelfluids nach Anspruch 1 oder 2 zur Herstellung von klimatisierter Luft.

6. Verwendung des Kältemittelfluids nach Anspruch 1 oder 2 als Ersatz für 1,1,1,2-Tetrafluorethan.

## Claims

1. Refrigerant fluid, having both an ODP of zero or less than 0.02 and a GWP of less than 150, comprising at least one cyclic diether containing two or three carbon atoms represented by the general formula (I) (cyclo-R-O-CHₓF₂₋ₓ-O-) in which R represents a -CH_{y}F_{2-y}-group, a -C₂H_{z}F_{4-z}- group or an ethylenic group chosen from -CH=CH-, -CH=CF-, -CF=CF-, -CF=CH-, -C(=CF₂)-, -C(=CH₂)-, and -C(=CHF)- and x and y may be identical or different, x and y each represent the value zero, 1 or 2 and z represents the value zero, 1, 2, 3 or 4, with the exclusion of hexafluoro-1,3-dioxolane (cyclo-CF₂-CF₂-O-CF₂-O-), 2,2,4-4-tetrafluoro-1,3-dioxetane (cyclo-CF₂-O-CF₂-O) and 1,3-dioxetane (cyclo-CH₂-O-CH₂-O-).

2. Refrigerant fluid according to Claim 1, **characterized in that** it also comprises at least one compound chosen from hydrocarbons, hydrofluorocarbons, (hydro)fluoroolefins, (hydro)fluoroethers, diethers containing three carbon atoms, cyclo(hydro)fluoroethers, (hydro)fluoroolefin ethers, cyclo(hydro)fluoroolefin ethers, bis(trifluoromethyl) sulphide, dimethyl ether or (hydro)fluoroiodocarbons.

3. Device for heat transfer in a compression system containing the refrigerant fluid according to Claim 1 or 2.

4. Device according to Claim 3, **characterized in that** it is used in the production of conditioned air.

5. Use of the refrigerant fluid according to Claim 1 or 2 for the production of conditioned air.

6. Use of the refrigerant fluid according to Claim 1 or 2 as a replacement for 1,1,1,2-tetrafluoroethane.
